# EUROPEAN PATENT SPECIFICATION

(11) **EP 1 755 204 B1**
(45) Date of publication and mention of the grant of the patent: **07.04.2010**
(21) Application number: 05700488.9
(22) Date of filing: 27.01.2005
(51) Int. Cl.: H01T 23/00, H01T 19/00, H02G 13/00

(54) **A LIGHTNING PROTECTION METHOD OF INTEGRATED ACTIVE AND PASSIVE PLASMA AND ITS DEVICE**
BLITZSCHUTZVERFAHREN EINES INTEGRIERTEN AKTIVEN UND PASSIVEN PLASMAS UND EINRICHTUNG DAFÜR
PROCEDE DE PROTECTION CONTRE LA FOUDRE A PLASMA ACTIF ET PASSIF INTEGRES ET DISPOSITIF ASSOCIE

(30) Priority: 29.03.2004 CN 200410022185
(43) Date of publication of application: 21.02.2007
(73) Proprietor: WANG, Kunsheng, Tech Zone, Kunming, Yunnan 65106 (CN)
(72) Inventor: WANG, Kunsheng A3-101 Yunnan Overseas Students, Yunnan 65106 (CN); LI, Xiaobin A3-101 Yunnan Overseas Students, Yunnan 65106 (CN)
(74) Representative: Strehl Schübel-Hopf & Partner
(86) International application number: PCT/CN2005/000116
(87) International publication number: WO 2005/093920

(56) References cited:
- EP-A- 0 320 358
- EP-A1- 0 320 358
- WO-A-98/01929
- CN-A- 1 314 774
- CN-Y- 2 168 358
- CN-Y- 2 330 089

## Description

### Technical Field

The invention relates to the technical field of lightning protection and specifically relates a lightning protection method and device using a mixture of actively and passively produced plasmas.

### Background Art

In the field of lightning protection, a lightning rod has been used for more than 250 years, since it was invented by the American Benjamin Franklin. The basic operation principle of a lightning rod is as follows:
1. It attracts and discharges lightning with the tip of the rod, above the protected object.
2. It discharges the lightning current into a grounding conductor via a conducting wire.
Besides lightning rods, lightning belts, lightning rod networks and early discharge lightning rods etc. all function on the basic operation principle of the lightning rod. To avoid direct voltage puncture to the protected object, the lightning rod discharges the lightning current and thus reduces the electric field strength. But as the lightning current is discharged by the lightning rod into ground, it produces some harmful phenomena, such as stronger LEMP (Lightning Electromagnetic Pulse), induction over-voltage, back flash-over, contact voltage and step voltage. They can cause some damages to objects, especially to modern electronic devices and networks.

At the end of 1970's, based on the technology of the lighting rod with single tip, array lightning eliminators (LE) with multi-tip were developed. It is expected that with plasma produced by corona discharge on the multi-tip under the action of a electric field of the lightning cloud, charges on the tips induced by a electric field of the lightning cloud can be dissipated, lightning cloud charges can be neutralised and the electric field strength in the surrounding space can be reduced. Thus, lightning voltage puncture to the pins can be shielded and eliminated. Although these lightning eliminators achieved some success in application, their corona discharge current on the multi-pin is still too small and is only about 600 µA in total. So, the plasma formed by the discharge current has not enough density and general capacity and often fails in lightning elimination when the conditions of the lightning cloud, the electric field strength and direction etc. are not suitable for lightning elimination.

### Disclosure of the Invention

The invention is a lightning protection method using a mixture of actively and passively produced plasmas. High-density plasma generated artificially by an active plasma generator is combined with the plasma passively produced by the corona discharge on the tip(s) of single or multi-tip lightning rod. In this case, the density and capacity of the plasmas are highly increased, and the function of the plasma as a good electrical conductor in the gaseous state is greatly enhanced to reduce and shield the electric field of the lightning cloud, thereby realising lightning elimination and lightning protection for the protected object within the protection range. The method and device of the invention effectively solve the problems and disadvantageous of the conventional lightning rods and lightning eliminators while retaining their advantages.

More specifically, the aim of the invention is to provide a lightning protection method and device using a mixture of actively and passively produced plasmas, with the following procedure:
a) When the strength of a electric field of the lightning cloud is detected by a lightning warning signal unit to reach an alarm limit, the unit sends a signal to an start active plasma generation unit and an air flow source unit.
b) The air flow source unit feeds air or other gases suited for ionisation to the active plasma generation unit and via plasma piping in each lightning rod blows out the high-density plasma generated by the active plasma generation unit at the tips of the lightning rod unit.
c) Under the action of electric field of the lightning cloud, the single or multi-tip lightning rod unit passively produces a plasma. When the tips of lightning rods are covered by an electrical insulator layer, their corona discharge can be strengthened and voltage puncture can be suppressed.
d) The actively generated plasma and the passively produced plasma are mixed at the tips of lightning rod unit and spread to the surrounding space. As plasma acts as a good electrical conductor in the gaseous state, it dissipates the electric charges on the tips of the rods induced by the electrical field of the lightning cloud and neutralises the electric charges of lightning cloud. The electric field strength in the surrounding space can thus be reduced and lightning cloud voltage puncture to the rods can be eliminated. As a result, lightning stroke to the protected object within the protection range of the rods can be prevented.
e) The active plasma generation unit and the air flow source unit are covered by a metal shield cover to protect the two units from outside electromagnetic interference.
f) According to this method, the lightning rods of the device do not need to be grounded for lightning protection, but it is possible to ground each lightning rod via a gap, if required.

Another aim of the invention is to provide a lightning protection device using a mixture of actively and passively produced plasmas. The device includes a lightning rod unit, an active plasma generation unit, an air flow source unit, and a lightning warning signal unit. The characteristics of the device are as follows:
The lightning warning signal unit is connected to the active plasma generation unit and the air flow source unit, and controls the two units to start or stop. The air flow source unit is connected to the active plasma generation unit and feeds air or other gases suited for ionisation to the active plasma generation unit. The lightning rod unit consists of a single rod or a plurality of rods each having an internal plasma piping. The active plasma generation unit is connected to the lightning rod unit. The plasma passively produced by corona discharge on single or multi tip by the electric field of the lightning cloud is mixed with the high-density plasma generated by the using artificial active electric field to ionise air or other suitable gases. The active and passive plasmas are mixed and spread out at the tips of lightning rods.

Using the characteristic of plasma as a good electrical conductor in the gaseous state, the plasma mixture dissipates the electric charges on the tips of the rods induced by the electric field of the lightning cloud, and neutralises the electric charges of the lightning cloud. The electric field strength in the surrounding space can thus be reduced, and lightning cloud voltage puncture to lightning rods can be shielded and eliminated. As a result, lightning stroke to the protected object within the protection range of the lightning rods of the device can be prevented.

When the electric field strength of the lightning cloud above the protected object is detected by lightning warning signal unit to reach an alarm limit, the unit sends a signal to start the active plasma generation unit and the air flow source unit. The air flow source unit operates and draws atmospheric air or other suitable gases and feeds them to the active plasma generation unit to be ionised to form a high-density plasma. Via plasma piping within lightning rods, the air flow source unit blows high-density plasma out at the tips of lightning rods.

When the tips of a single or a plurality of lightning rods are covered by an electrical insulator layer, their corona discharge under the action of the electric field of the lightning cloud can be strengthened, more plasma can be produced, and lightning cloud voltage puncture to lightning rods can be suppressed more effectively.

To ensure safe and reliable operation of the units in the device, the active plasma generation unit and the air flow source unit are covered by a spherical metal shield or other cover of suitable form. The shield cover is connected to a grounding system to form good grounded shielding protection for the active plasma generation unit and the air flow source unit. Single or multi lightning rods of the device do not need to be grounded for lightning protection, but it is possible to ground each lightning rod via a gap, if required.

Compared with other current lightning protection methods and devices, the method and device using a mixture of active and passive plasmas for lightning protection in accordance with the invention have the following advantages.
1. In the invention, a mixture of active and passive plasmas is used for lightning prevention or elimination, and there is no need to discharge lightning current to ground. In the invention, the following advantages of current single or multi lightning rods are used for reference. To attract lightning, a lightning rod is set above the protected object at some distance. An array lightning eliminator produces passive plasma to reduce lightning voltage puncture, thus protecting the protected object from lightning stroke within its protection range. The invention further solves the following problems. Discharge lightning current with a lightning rod to ground may cause many damages. For an array lightning eliminator, its passive plasma does not have enough density and general capacity, so that its probability of lightning voltage puncture is higher.
2. In applications of the device according to the invented, if it is required to ground the lightning rods of the device, they may be grounded via a gap, so that the device provides multi operation ways for lightning protection and is easily accepted in engineering applications.
3. As a key unit of the device, the active plasma generator is simple and reliable in structure, light, small in volume, low in cost and energy saving. The power of the plasma generator is about 600 W and the generator starts to operate only when the lightning warning limit signal is on. The average period for preventing each lightning with the device is about 2 hr and energy consumption is only 1.2 kWh. The density of the plasma actively generated is up to 10¹⁵/m³. As the device costs about the same as an array lightning eliminator, saves energy in operation, and actively generates high-density plasma by economically using atmospheric air, it has excellent advantages in performance and economy.
4. As the surface area of the high-density plasma is very large, when it is spread to the space, it forms a large plasma expanding volume around the device to avoid lightning cloud discharge on the side part of lightning rods. Thus, that the device is suitably applied in different topographies and positions.
5. As the device does not need to ground the discharge lightning current, it can be applied in lightning protections of ungrounded moving objects and objects in the area with a higher earth resistance rate.

### Brief Description of Attached Drawing

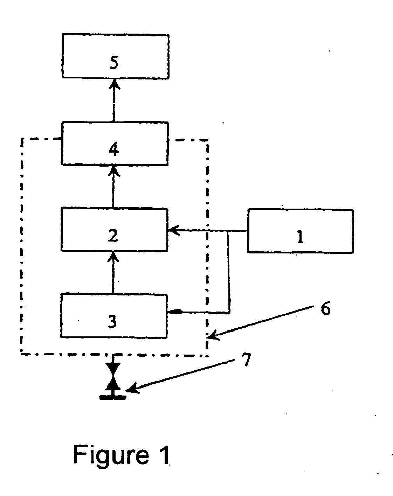

Figure 1 shows an operation principle block-diagram of the invention.

### Best Mode of Realising the Invention

Referring to the attached drawing, the invention will be further explained as follows.

When the electric field strength of the lightning cloud above the protected object is detected by lightning warning signal unit to reach an alarm limit, the unit 1 sends a signal to start an active plasma generation unit 2 and an air flow source unit 3. The air flow source unit 3 operates and feeds air or other gases suited for ionisation to the active plasma generation unit 2 and, via plasma piping in each lightning rod, blows out the high-density plasma generated by the active plasma generation unit at the tips of single or multi lightning rod unit 4.

The plasma passively produced by corona discharge on the single or multi tip of lightning rods 4 under the action of the electrical field of a lightning cloud is mixed with the high-density plasma generated by using an artificial active electrical field to ionise air or other suitable gases. the active and passive plasmas are mixed and spread out at the tips of the lightning rods. Using the characteristic of plasma as a good electrical conductor in the gaseous state, the plasma mixture dissipates the electric charges on the tips of the rods induced by the electric field of the lightning cloud and neutralises the electric charges of lightning cloud. The electric field strength in the surrounding space can thus be reduced, and lightning cloud voltage puncture to lightning rods can be shielded and eliminated. As a result, lightning stroke to the protected object within the protection range of the lightning rods of the device can be prevented.

The tips of the single or multi lightning rods can be covered by an electrical insulator layer 5, to enhance their corona discharge and suppress lightning cloud voltage puncture to lightning rods more effectively.

To ensure safe and reliable operation of the units in the device, the active plasma generation unit 2 and the air flow source unit 3 are covered by a spherical metal shield cover 6 or other covers of suitable forms. The shield cover is connected with a grounding system to form a good grounded shielding protection for the active plasma generation unit 2 and the air flow source unit 3. When the grounding system is needed only for the shielding cover grounding, the grounding system 7 can use a grounding conductor with a current carrying level much smaller than the level of the lightning current discharge, and the grounding system 7 need to be fully insulated from the lightning rods 4. When the lightning rods 4 must be connected via a gap to ground system 7 to discharge lightning current, the ground system 7 should have the current carrying level for lightning current discharge.

### Industrial Applicability

In the invention, the following advantages of current single or multi lightning rod are used for reference. To attract lightning, a lightning rod is set above the protected object at some distance. An array lightning eliminator produces passive plasma to reduce lightning voltage puncture and protects the protected object from lightning stroke within its protection range. Further, the invention solves the following problems. Discharging lightning current with a lightning rod to ground may cause many damages. For an array lightning eliminator, its passive plasma does have not enough density and general capacity, so that its lightning voltage puncture probability is higher. In the invention, active and passive plasmas are mixed for lightning prevention, and there is no need to discharge the lightning current to ground, thereby avoiding many damages caused by discharging the current to ground. As the surface area of high-density plasma is very large when spread to the space, it forms a larger plasma expanding volume around the device to avoid a lightning cloud to discharge to the side part of lightning rods. The device is thus suitable for application in different topographies and positions. As the device does not need to discharge lightning current to ground, it can be applied in lightning protection of ungrounded moving objects and objects in the area with higher earth resistance rates.

## Claims

1. A lightning protection method using a mixture of active and passive plasmas, **characterised in that:**
a) when the strength of a lightning cloud electrical field is detected by a lightning warning signal unit (1) to reach an alarm limit, the unit sends a signal to start an active plasma generation unit (2) and an air flow source unit (3);
b) the air flow source unit (3) feeds air or another suitable gases to the active plasma generation unit (2) and via a plasms piping in each lightning rod (4), blows out the high-density plasma generated by the active plasma generation unit (2) at the tip(s) of lightning rod unit (4);
c) under the action of the electric field of the lightning cloud, the single or multi-tip lightning rod unit (4) passively forms a corona discharge and produces a plasma;
d) the actively and passively produced plasmas are mixed at the tip(s) of the lightning rod unit (4) and spread to the surrounding space,
wherein the plasma, which is a good electrical conductor in the gaseous state, dissipates the electric charges on the tip(s) of the rod(s) induced by the lightning cloud electrical field, and neutralises the electric charges of lightning cloud, thereby reducing the electrical field strength in the surrounding space and eliminating lightning cloud voltage puncture to the rods and, as a result, the preventing lightning stroke to the protected object within the protection range of the rods.

2. The method of claim 1, **characterised in that** in step b), the single or multi-tips of the lightning rod unit (4) under the action of the electric field of the lightning cloud passively produce plasma, wherein when the tips of lightning rod unit (4) are covered by electrical insulator layer (5) their corona discharge can be strengthened and voltage puncture can be suppressed.

3. The method of claim 1, **characterised in that** the active plasma generation unit (2) and the air flow source unit (3) are covered by a metal shield cover (6) to protect the two units from outside electromagnetic interference.

4. The method of claim 1, **characterised in that** the lightning rods (4) of the device do not need to be grounded for lightning protection, but may each be grounded to ground unit (7) via a gap, if required.

5. A device using a mixture of active and passive plasmas for lightning protection including a lightning rod unit (4), an active plasma generation unit (2), an air flow source unit (3) and a lightning warning signal unit (1), **characterised in that:**
the lightning warning signal unit (1) is connected to the active plasma generation unit (2) and the air flow source unit (3) to controls both units to start or stop;
the air flow source unit (3) is connected to the active plasma generation unit (2) and feeds air or other gases suited for ionisation to unit (2);
the lightning rod unit (4) may have a single rod or a plurality of rods each with an interior plasma piping, the lightning rod unit (4) being connected to the active plasma generation unit (2).

6. The device of claim 5, **characterised in that** the lightning rod unit (4) is covered by an electrical insulator layer (5).

7. The device of claim 5, **characterised in that** the active plasma generation unit (2) and the air flow source unit (3) are covered by a metal shield cover (6).

8. The device of claim 5, **characterised in that** the lightning rod unit (4) is indirect grounded by being connected to a ground unit (7) via a gap.

## Patentansprüche

1. Blitzschutzverfahren unter Verwendung einer Mischung von aktiven und passiven Plasmas, **gekennzeichnet dadurch, dass:**
a) wenn von einer Blitzwarnsignaleinheit (1) detektiert wird, dass die Stärke eines elektrischen Blitzwolkenfeldes einen Alarmgrenzwert erreicht, die Einheit ein Signal zum Starten einer Erzeugungseinheit (2) für aktives Plasma und einer Luftströmungsquelleneinheit (3) verschickt;
b) die Luftströmungsquelleneinheit (3) der Erzeugungseinheit (2) für aktives Plasma Luft oder andere geeignete Gase zuführt und, über ein Plasmaleitungssystem in jeder Blitzfangstange (4), das von der Erzeugungseinheit (2) für aktives Plasma an der oder den Spitzen der Blitzfangstange (4) erzeugte Plasma hoher Dichte ausbläst;
c) die Blitzfangstange (4) mit einer einzelnen oder mehreren Spitzen unter der Wirkung des elektrischen Feldes der Blitzwolke passiv eine Koronaentladung bildet und ein Plasma hervorbringt;
d) die aktiv und passiv hervorgebrachten Plasmas an der oder den Spitzen der Blitzfangstange (4) vermischt werden und auf den umgebenden Raum verteilt werden,
wobei das Plasma, das im gasförmigen Zustand ein guter elektrischer Leiter ist, die elektrischen Ladungen an der oder den Spitzen der einen oder der mehreren Stangen, die durch das elektrische Blitzwolkenfeld induziert worden sind, dissipiert und die elektrischen Ladungen der Blitzwolke neutralisiert, wodurch die elektrische Feldstärke im umgebenden Raum verringert wird und Blitzwolkenspannungsdurchschlag an den Stangen eliminiert wird und im Ergebnis Blitzschlag auf das geschützte Objekt innerhalb des Schutzbereichs der Stangen verhindert wird.

2. Verfahren nach Anspruch 1, **gekennzeichnet dadurch, dass** im Schritt b) die einzelne oder die mehreren Spitzen der Blitzfangstangeneinheit (4) unter der Wirkung des elektrischen Feldes der Blitzwolke passiv Plasma hervorbringen, wobei ihre Koronaentladung, wenn die Spitzen der Blitzfangstangeneinheit (4) durch eine elektrische Isolierungsschicht (5) bedeckt sind, verstärkt werden kann und Spannungsdurchschlag unterdrückt werden kann.

3. Verfahren nach Anspruch 1, **gekennzeichnet dadurch, dass** die aktive Plasmaerzeugungseinheit (2) und die Luftströmungsquelleneinheit (3) durch eine Metallschirmabdeckung (6) bedeckt sind, um die zwei Einheiten vor äußerer elektromagnetischer Interferenz zu schützen.

4. Verfahren nach Anspruch 1, **gekennzeichnet dadurch, dass** die Blitzfangstangen (4) des Geräts zum Blitzschutz nicht geerdet zu werden brauchen, aber dass sie, falls erforderlich, über eine Lücke hinweg an einer Erdungseinheit (7) geerdet werden können.

5. Gerät, das eine Mischung von aktiven und passiven Plasmas zum Blitzschutz verwendet und das eine Bitzfangstangeneinheit (4), eine aktive Plasmaerzeugungseinheit (2), eine Luftströmungsquelleneinheit (3) und eine Blitzwarnsignaleinheit (1) enthält, folgendermaßen **gekennzeichnet**:
die Blitzwarnsignaleinheit (1) ist mit der aktiven Plasmaerzeugungseinheit (2) und der Luftströmungsquelleneinheit (3) verbunden, um das Starten oder Beenden beider Einheiten zu steuern;
die Luftströmungsquelleneinheit (3) ist mit der aktiven Plasmaerzeugungseinheit (2) verbunden und führt der Einheit (2) Luft oder andere zur Ionisierung geeignete Gase zu;
die Blitzfangstangeneinheit (4) kann eine einzelne Stange oder mehrere Stangen jeweils mit einem inneren Plasmaleitungssystem aufweist, wobei die Blitzfangstangeneinheit (4) mit der aktiven Plasmaerzeugungseinheit (2) verbunden ist.

6. Gerät nach Anspruch 5, **gekennzeichnet dadurch, dass** die Blitzfangstangeneinheit (4) mit einer elektrischen Isolierungsschicht (5) bedeckt ist.

7. Gerät nach Anspruch 5, **gekennzeichnet dadurch, dass** die aktive Plasmaerzeugungseinheit (2) und die Luftströmungsquelleneinheit (3) von einer Metallschirmabdeckung (6) bedeckt sind.

8. Gerät nach Anspruch 5, **gekennzeichnet dadurch, dass** die Blitzfangstangeneinheit (4) indirekt geerdet ist, indem sie über eine Lücke hinweg mit einer Erdungseinheit (7) verbunden ist.

## Revendications

1. Procédé de protection contre la foudre utilisant un mélange de plasmas actifs et passifs, **caractérisé en ce que** :
a) lorsque l'intensité d'un champ électrique de nuage de foudre est détectée par une unité de signal d'alerte à la foudre (1) pour atteindre une limite d'alarme, l'unité envoie un signal pour lancer une unité de génération de plasmas actifs (2) et une unité de source d'écoulement d'air (3),
b) l'unité de source d'écoulement d'air (3) délivre de l'air ou d'autres gaz appropriés à l'unité de génération de plasmas actifs (2) et, via une conduite de plasma dans chaque paratonnerre (4), purge le plasma haute densité généré par l'unité de génération de plasmas actifs (2) au niveau de la pointe ou des pointes de l'unité de paratonnerre (4),
c) sous l'action du champ électrique du nuage de foudre, l'unité de paratonnerre à une seule pointe ou à plusieurs pointes (4) forme de manière passive un effluve et produit un plasma,
d) les plasmas produits de manière active et passive sont mélangés au niveau de la pointe ou des pointes de l'unité de paratonnerre (4) et répartis dans l'espace environnant,
dans lequel le plasma, lequel est un excellent conducteur électrique dans l'état gazeux, dissipe les charges électriques sur la pointe ou les pointes du paratonnerre ou des paratonnerres générées par le champ électrique de nuage de foudre, et neutralise les charges électriques de nuage de foudre, de manière à réduire l'intensité du champ électrique dans l'espace environnant et à éliminer une perforation de tension de nuage de foudre dans les paratonnerres et, en résultat, à empêcher un foudroiement de l'objet protégé dans la plage de protection des paratonnerres.

2. Procédé selon la revendication 1, **caractérisé en ce que** à l'étape b), la pointe unique ou multiple de l'unité de paratonnerre (4) sous l'action du champ électrique du nuage de foudre produit de manière passive du plasma, dans lequel lorsque les pointes de l'unité de paratonnerre (4) sont recouvertes d'une couche d'isolant électrique (5), leur effluve peut-être renforcé et une perforation de tension peut-être atténuée.

3. Procédé selon la revendication 1, **caractérisé en ce que** l'unité de génération de plasmas actifs (2) et l'unité de source d'écoulement d'air (3) sont recouvertes d'un couvercle à écran métallique (6) pour protéger les deux unités vis-à-vis d'une interférence électromagnétique extérieure.

4. Procédé selon la revendication 1, **caractérisé en ce que** les paratonnerres (4) du dispositif n'ont pas besoin d'être mis à la terre pour une protection contre la foudre, mais chacun d'eux peut être relié à une unité de mise à la terre (7) via un espace interélectrode, si nécessaire.

5. Dispositif utilisant un mélange de plasmas actifs et passifs pour une protection contre la foudre incluant une unité de paratonnerre (4), une unité de génération de plasmas actifs (2), une unité de source d'écoulement d'air (3) et une unité de signal d'alerte à la foudre (1), **caractérisé en ce que** :
l'unité de signal d'alerte à la foudre (1) est connectée à l'unité de génération de plasmas actifs (2) et à l'unité de source d'écoulement d'air (3) pour commander le lancement ou l'arrêt des deux unités,
l'unité de source d'écoulement d'air (3) est connectée à l'unité de génération de plasmas actifs (2) et délivre de l'air ou d'autres gaz adaptés à l'ionisation à l'unité (2),
l'unité de paratonnerre (4) peut avoir un seul paratonnerre ou une pluralité de paratonnerres chacun ayant une conduite de plasma intérieure, l'unité de paratonnerre (4) étant connectée à l'unité de génération de plasmas actifs (2).

6. Dispositif selon la revendication 5, **caractérisé en ce que** l'unité de paratonnerre (4) est recouverte par une couche d'isolant électrique (5).

7. Dispositif selon la revendication 5, **caractérisé en ce que** l'unité de génération de plasmas actifs (2) et l'unité de source d'écoulement d'air (3) sont recouvertes d'un couvercle à blindage métallique (6).

8. Dispositif selon la revendication 5, **caractérisé en ce que** l'unité de paratonnerre (4) est mise à la terre indirectement en étant connectée à une unité de mise à la terre (7) via un espace interélectrode.
